# EUROPEAN PATENT APPLICATION

(11) **EP 2 141 588 A1**
(43) Date of publication of application: **06.01.2010**
(21) Application number: 08305370.2
(22) Date of filing: 02.07.2008
(51) Int. Cl.: G06F 9/44

(54) **A method for generating a wizard application, corresponding device, and computer program product therefore**

(71) Applicant: Alcatel Lucent, 75008 Paris (FR)
(72) Inventor: The designation of the inventor has not yet been filed
(74) Representative: Brose, Gerhard

(57) **Abstract**

The invention concerns a method for generating a wizard application, wherein the method comprises the steps of taking as input a human-readable declaration of a desired application behavior and converting the human-readable declaration into a program for execution by a computer, wherein, when the human-readable declaration comprises a description of a plurality of dialog boxes and a description of interdependencies between the dialog boxes, then the conversion of the human-readable declaration into the program comprises the step of, based on the description of interdependencies, transforming the description of the dialog boxes into a linear sequence of computer instructions. The invention further concerns a device and computer program product therefore.

## Description

The invention relates to a method for generating a wizard application according to the preamble of claim 1, a device according to the preamble of claim 8, and a computer program product according to the preamble of claim 9.

A graphical user interface (GUI) is a type of user interface that allows people to interact with a computer and computer-controlled devices. It presents graphical icons, visual indicators, or special graphical elements called widgets or controls. Instead of offering only text menus, or requiring typed commands, the actions available to a user are performed through direct manipulation of these widgets. An example of a widget is a window, meaning a visual area, usually rectangular in shape, displaying the output of and allowing input for one of a number of simultaneously running computer processes. A window used primarily for the purpose of forming a dialog between the computer and the user is also called a dialog box.

A wizard is a widget where the user is presented with a sequence of dialog boxes. These dialog boxes lead the user through a series of steps, performing tasks in a specific sequence. Sometimes it may otherwise be possible to reach the same result without using the wizard. However, it may be easier to perform this task using the wizard, especially for complex or infrequently performed tasks where the user is unfamiliar with the steps involved. Thus, the wizard paradigm is mostly used to complete lengthy and interactive processes such as software installation and configuration. Sometimes called assistants, wizards have become commonplace in most consumer-oriented computer operating systems.

In software engineering, a conventional approach to developing a wizard is the use of a general-purpose programming language such as C, C++, or Perl. In this case, the dialog boxes constituting the wizard are commonly displayed through the GUI included by the underlying operating system. In this context, the GUI is also referred to as a desktop environment. For use by the wizard developer, some desktop environments include a widget toolkit, sometimes called widget library or GUI toolkit. An example of such a toolkit is GTK+, maintained by the GNOME Foundation and published on the Internet website http://library.gnome.org/devel/gtk/stable.

The GNOME desktop environment, comprising GTK+, includes the GnomeDruid widget, which may serve as a basis of a typical wizard implementation. A wizard developer wishing to make use of the GnomeDruid widget would invoke the respective functions provided by the GNOME user interface library from his application source code, commonly called just source or code. A list of the functions supported by the GnomeDruid widget is available on the Internet website
http://library.gnome.org/devel/libgnomeui/latest/GnomeDruid.

A downside of this conventional approach is the effort imposed on the application developer for maintaining the wizard. If the sequence of dialog boxes or other aspects of the wizard presentation require modification, he is forced to identify and adapt the associated source code. Since source code quantity tends to increase with the number of dialog boxes comprised by the wizard, these maintenance tasks often become tedious and error-prone. An object of the invention is thus to propose an improved approach to wizard development.

This object is achieved by a method according to the teaching of claim 1, a device according to the teaching of claim 8, and a computer program product according to the teaching of claim 9.

The main idea of the invention is to separate the specification of the dialog boxes and their mutual dependencies from the implementation details of the desired wizard. When compared to the traditional development approach where behavior of the wizard is implicit in the source code, separating these aspects greatly improves maintainability by the application developer. As an additional benefit, representation of the dialog boxes and interdependencies is potentially irrespective of the destination platform of the executable application. Portability of the wizard is thus increased as the above specifications, once derived, may be used in multiple desktop environments and operating systems with little or no adaptation.

Further developments of the invention can be gathered from the dependent claims and the following description.

In the following the invention will be explained further making reference to the attached drawings.

To generate a wizard application according to an embodiment of the invention, a human-readable declaration of a desired application behavior is taken as input. The human-readable declaration comprises a description of a plurality of dialog boxes and a description of interdependencies between the dialog boxes. The human-readable declaration is then converted into a program for execution by a computer. Upon converting the human-readable declaration into the program, the description of dialog boxes, based on the description of interdependencies, is transformed into a linear sequence of computer instructions.

Fig. 1 schematically shows a method for generating a wizard application according to an embodiment of the invention.

Fig. 2 shows a directed acyclic graph for use with a method according to an embodiment of the invention to declare a desired application behavior.

Fig. 3 shows a state diagram of the application behavior declared by the DAG of Fig. 2.

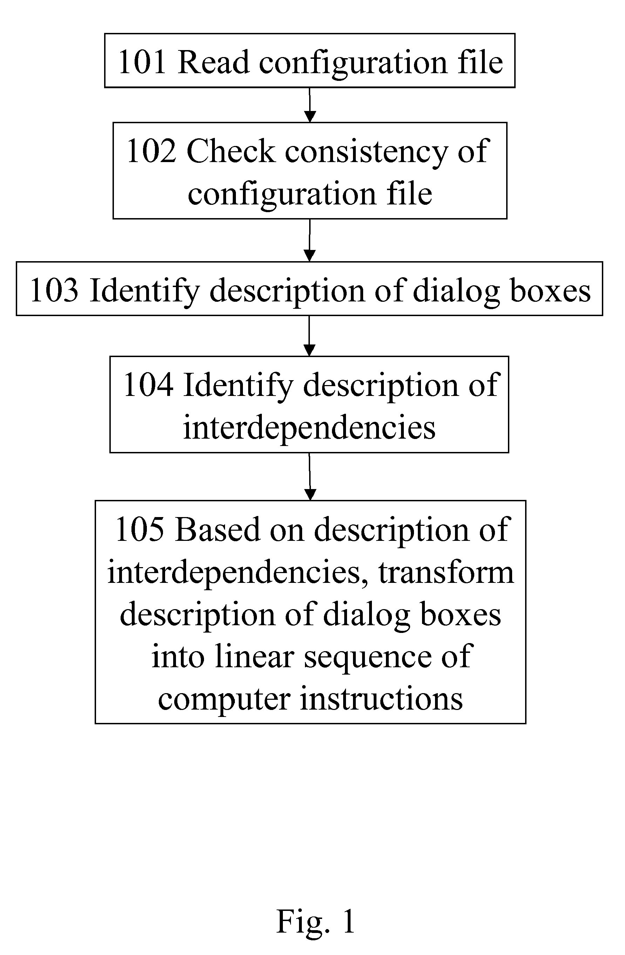

In the following, a method according to the invention is elucidated by way of example, referencing Fig. 1.

For illustrative purposes, the embodiment of the given example is assumed to take the form of a software program. It is understood that an alternative embodiment may take the form of a hardware device or a combination of software and hardware components. To distinguish the software program of Fig. 1 from the wizard application to be generated, the software program of Fig. 1 is hereinafter referred to as a Rapid Application Development tool (Rapid Application Development = RAD).

Fig. 1 shows five consecutive steps 101 through 105. The steps 101 through 105 are connected by arrows to indicate the preferred sequence of their execution.

In the first step 101, the RAD tool reads the human-readable declaration of the desired application behavior. To allow the declaration to remain available for programs to use after the RAD tool has terminated, the declaration takes the form of a configuration file, which is typically based on some kind of durable storage. To facilitate sharing the configuration file across different information systems, the Extensible Markup Language (XML) is used to encode the declaration contained therein. XML is standardized by the World Wide Web Consortium (W3C) and specified in W3C Recommendation 16 August 2006.

In the second step 102, to allow for the detection of errors in the configuration file of the first step 101, the RAD tool performs a consistency check on the contained XML document. This consistency check comprises a verification that the document conforms to all XML syntax rules and is thus well-formed. Additionally, the RAD tool validates that the document conforms to certain semantic rules. These rules may either be implicit in the RAD tool, or included as an XML schema, that is, a description of the constraints on the structure and contents of the document, above and beyond the basic syntax constraints imposed by XML itself.

In the third step 103, the RAD tool identifies the description of dialog boxes within the configuration file of the first step 101. To allow for the use of a general-purpose XML parser, each dialog box is described by means of one or more elements and attributes of the XML document constituting the configuration file. For example, an element content or attribute value may indicate the type of each dialog box, depending on the kind of user interaction desired when the generated wizard is executed. An example of a type of dialog box is an alert, which, upon execution, displays a message and requires only an acknowledgment by the wizard user that the message has been read. Such an alert may be used to provide simple confirmation of an action. Other elements or attributes may pertain to the message text to be displayed by each dialog box. Still other elements or attributes may concern the buttons, sometimes called command buttons or push buttons, to be provided for wizard user interaction upon presenting the dialog box. For example, a label may be provided for each button, such as "OK", "Cancel", "Reset", or "Help".

In the fourth step 104, the RAD tool identifies the description of interdependencies within the configuration file of the first step 101. As in the third step 103, to allow for the use of a general-purpose XML parser, each interdependency is described by means of one or more elements and attributes of the XML document constituting the configuration file. For example, an element content or attribute value may indicate a logical sequence of presenting the dialog boxes upon execution of the wizard. Other elements or attributes may pertain to the action to be taken upon activation of a specific button by the wizard user. For example, a corresponding element may specify that, upon presenting a certain dialog box, selecting a button labeled "Next" will cause the generated wizard to transition to a subsequent dialog box in the logical sequence of dialog boxes.

It is understood that, without deviating from the spirit of the invention, a conventional XML parser may perform some or all of the steps 102 through 104 in a single pass of the configuration file. Specifically, the XML parser may at the same time analyze the syntax of the configuration file, check for syntax errors, and transform the contained XML document into a form suitable for further processing by the RAD tool.

Finally, in the fifth step 105, the RAD tool transforms the description of dialog boxes of the third step 103 into a linear sequence of computer instructions, taking into account the description of interdependencies of the fourth step 104. A primary result of this transformation is a wizard application displaying the behavior declared in the configuration file of the first step 101. The generated wizard may be intended for execution on the same computer as the RAD tool, or it may be intended for use in a different desktop environment.

In the given embodiment, the instructions resulting from the fifth step 105 take the form of machine code that can be readily executed on the target hardware. In this case, the process of the fifth step 105 is known as code generation by those skilled in the art. This step may require the RAD tool to perform multiple passes over various intermediate forms of the instructions to be generated. Some or all of these passes may apply algorithms for code optimization to ensure that the resulting wizard executes more rapidly, or is capable of operating with less memory storage or other resources.

In an alternative embodiment, the instructions resulting from the fifth step 105 take the form of source code generated in some human-readable computer programming language. The RAD tool may store this source code in one or more text files, optionally organized into a directory tree which is then also called a source tree. In order to ultimately execute the wizard constituted by the source code, the latter may be converted into an executable file by a compiler, or executed on the fly from its human-readable form with the aid of an interpreter.

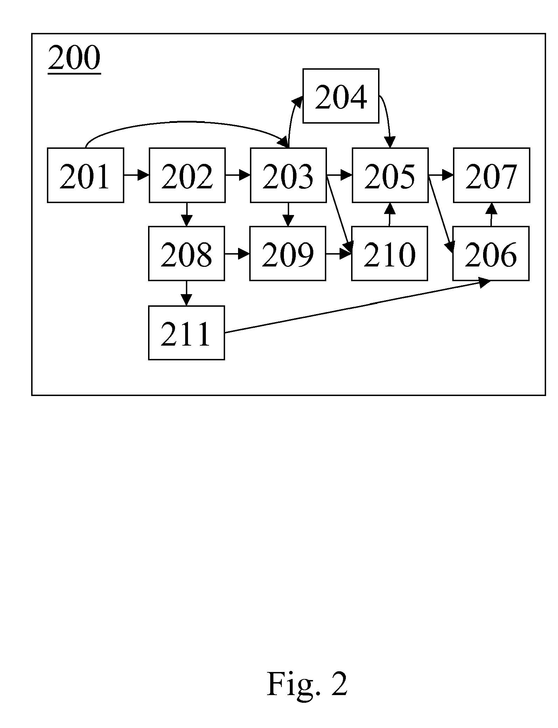

Fig. 2 shows a directed acyclic graph (DAG) for use with a method according to an embodiment of the invention to declare a desired application behavior. By a graph is meant a set of objects called points, nodes, or vertices connected by links called lines or edges. A DAG is a directed graph with no directed cycles; that is, for any vertex v, there is no nonempty directed path that starts and ends on v. Informally speaking, a DAG "flows" in a single direction.

The DAG 200 of Fig. 2 contains a set of vertices 201 through 211. A vertex or node is the fundamental unit out of which graphs are formed.

Some of the vertices 201 through 211 are connected by links called lines or edges. Since the DAG 200 is a directed graph, sometimes called digraph, each edge is directed, reflected by the use of an arrow in Fig. 2.

The first vertex 201 is commonly called the source of DAG 200 as it possesses no incoming edges. Analogously, the last vertex 207 is called the sink of DAG 200 as it possesses no outgoing edges. An alternative DAG for use with an embodiment of the invention may have more than one source or more than one sink without contradicting the spirit of the invention.

By the length of a finite DAG is meant the number of edges of a longest directed path. Since the longest directed paths from the source 201 to the sink 207 of the DAG 200 comprise eight edges, 201-202-208-209-210-205-206-207, the length of DAG 200 equals 8.

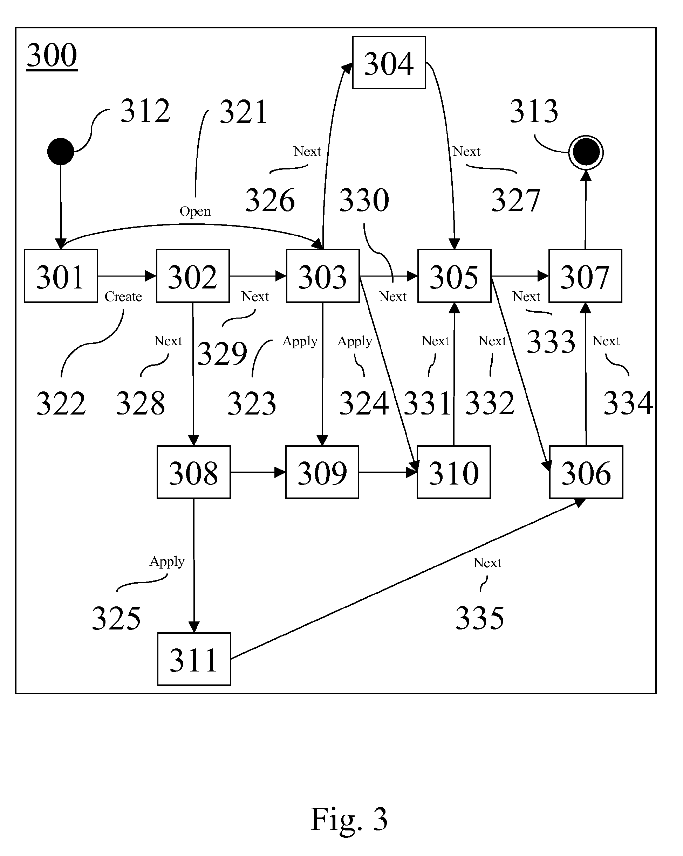

Fig. 3 shows a finite state machine (FSM) or finite state automaton 300 representing a state diagram of the application behavior declared by DAG 200. Specifically, Fig. 3 shows eleven states 301 through 311, an initial state 312, and a final state 313, transitions 321 through 335 between the eleven states 301 through 311, and actions "Next", "Apply", "Open", and "Create" associated with the transitions 321 through 335.

Since the behavior of a wizard is composed of a finite number of states, transitions between those states, and actions, the FSM 300 is used to model this application behavior. Each state 301 through 311 of the FSM 300 represents a dialog box of the wizard and results from the transformation by the RAD tool of the corresponding vertex 201 through 211 of the DAG 200. In addition, the initial state 311 and the final state 312 denote the starting and end points of a navigation path a wizard user may take through the dialog boxes. Each transition 321 through 335 between two states of the FSM 300 represents an allowable transition between two dialog boxes of the wizard and results from the corresponding edge of the DAG 200.

Each transition 321 through 335 of the FSM 300 is also labeled with a transition condition indicating the button to be pressed by the wizard user to trigger the corresponding transition. In the given example, selecting the "Open" button in the dialog box corresponding to state 301 of the FSM 300 would trigger transition 321, causing the wizard to present the dialog box corresponding to state 303. Furthermore, transition 322 would be triggered by activating the "Create" button, transitions 323 through 325 by activating the "Apply" button, and transitions 326 through 335 by activating the "Next" button of the respective dialog box. As those skilled in the art will appreciate, the length 8 of DAG 200 is the maximum number of dialog boxes a user may encounter when navigating through the wizard of Fig. 3.

## Claims

1. A method for generating a wizard application, the method comprising the steps of
taking as input a human-readable declaration of a desired application behavior (300) and
converting the human-readable declaration into a program for execution by a computer,
**characterized in that,** when the human-readable declaration comprises a description of a plurality of dialog boxes and a description of interdependencies between the dialog boxes, then the conversion of the human-readable declaration into the program comprises the step of
based on the description of interdependencies, transforming the description of the dialog boxes into a linear sequence of computer instructions.

2. A method according to claim 1, **characterized in that,** in order to convert the human-readable declaration into the program, the process takes as input from the human-readable declaration a directed acyclic graph (200), wherein each vertex (201 to 211) of the directed acyclic graph (200) represents one of the dialog boxes and an edge from a first vertex to a second vertex of the directed acyclic graph (200) represents one of the interdependencies.

3. A method according to claim 1, **characterized in that,** in order to convert the human-readable declaration into the program, the process takes as input from the human-readable declaration a logical sequence of presenting the dialog boxes upon execution of the program.

4. A method according to claim 1, **characterized in that,** in order to convert the human-readable declaration into the program, the process takes as input from the human-readable declaration conditions for transitioning between the dialog boxes upon execution of the program.

5. A method according to claim 4, **characterized in that,** in order to convert the human-readable declaration into the program, the process further takes as input from the human-readable declaration a description of dialog elements, the conditions comprising an activation of at least one of the dialog elements upon execution of the program.

6. A method according to claim 1, **characterized in that** the method further comprises a consistency check of the human-readable declaration.

7. A method according to claim 1, **characterized in that,** when the human-readable declaration comprises a configuration file, then the method further comprises the step of reading the configuration file.

8. A device for generating a wizard application, the device comprising
input means for receiving a human-readable declaration of a desired application behavior,
conversion means for converting the human-readable declaration into a program for execution by a computer,
**characterized in that** the conversion means comprises
transformation means for transforming, based on the description of interdependencies, the description of the dialog boxes into a linear sequence of computer instructions.

9. A computer program product comprising a computer usable medium including a computer readable program, wherein the computer readable program when executed on a computer causes the computer to
take as input a human-readable declaration of a desired application behavior,
convert the human-readable declaration into a further program for execution by a further computer,
**characterized in that,** when the human-readable declaration comprises a description of a plurality of dialog boxes and a description of interdependencies between the dialog boxes then, upon conversion of the human-readable declaration, the computer readable program causes the computer to
transform, based on the description of interdependencies, the description of the dialog boxes into a linear sequence of computer instructions.
